# EUROPEAN PATENT APPLICATION

(11) **EP 2 527 389 A1**
(43) Date of publication of application: **28.11.2012**
(21) Application number: 11734581.9
(22) Date of filing: 14.01.2011
(51) Int. Cl.: C08J 3/11, B01F 1/00, B01F 7/16, B01F 7/18, B01F 15/06

(54) **RUBBER SOLUTION PRODUCTION METHOD AND RUBBER SOLUTION PRODUCTION DEVICE**

(30) Priority: 21.01.2010 JP 2010011015
(71) Applicant: Nitto Denko Corporation, Ibaraki-shi, Osaka 567-8680 (JP)
(72) Inventor: ISOBE, Kunihiro, Ibaraki-shi Osaka 567-8680 (JP); TOYOOKA, Takashi, Ibaraki-shi Osaka 567-8680 (JP)
(74) Representative: Müller-Boré & Partner Patentanwälte
(86) International application number: PCT/JP2011/050501
(87) International publication number: WO 2011/089974

(57) **Abstract**

In order to both produce a high quality rubber solution that preserves the molecular structure of the rubber and improve productivity, the rubber solution is created by mixing a solvent (7) into a source material (6), stirring while applying a shear force to the source material (6), and separating the source material (6) into block (61) units that are subsequently dissolved in the solvent (7), thereby continuously performing a solvent addition process, a source material addition process, a separation process, a dissolving process, and a mixing process in a single container (2).

## Description

### TECHNICAL FIELD

The present invention relates to a rubber solution production method and a rubber solution production device which dissolve rubber to a solvent to produce a rubber solution.

### BACKGROUND ART

The following method is adopted to produce a rubber solution from a source material which is a large piece of rubber. The source material is fragmented into small pieces, and then the small pieces of rubber are mixed with a solvent and stirred, thereby dissolving the rubber into the solvent. In this method, the source material is fragmented into small pieces by, for example, a guillotine-like cutting apparatus which moves up and down a cutting blade to cut the source material into a plate-like form, or a cutting apparatus having a cutting blade disposed horizontally to form a space between the blade and a table, the cutting apparatus slicing the source material by advancing and retracting the source material on the table. Further, the following apparatuses described in Patent documents 1 and 2 are also adoptable.

Namely, Patent document 1 discloses a structure in which a cut screw is provided to a discharge port of a hopper, and a sprocket for delivering the source material towards the discharge port is provided at the bottom of the hopper. With this structure, the source material supplied to the hopper is successively fed to the cut screw and pulverized. Further, Patent document 2 discloses a structure in which a fixed blade and a rotating blade are provided inside a drum, and the source material supplied to the drum is successively cut by the fixed blade and the rotating blade. After fragmentation using any of these apparatuses, small pieces of rubber obtained are supplied to a stirring device along with a solvent, mixed, and stirred to form a rubber solution.

### [Prior Art Document]

### [Patent document]

[Patent document 1] Japanese Unexamined Patent Publication No. 225979/2002 (Tokukai 2002-225979)
[Patent document 2] Japanese Unexamined Patent Publication No. 240015/1999 (Tokukaihei 11-240015)

### DISCLOSURE OF THE INVENTION

### TECHNICAL PROBLEM

However, when the source material is pulverized without any condition setting, the molecular structure of the rubber structuring the source material may be destroyed and the quality of the rubber solution may deteriorate. Further, the method involving a device for fragmenting the source material and another apparatus for dissolving the small pieces of rubber requires various operations such as storing and transferring of the source material fragmented into small pieces, and supplying of the same to a stirring device. This leads to an insufficient productivity.

In view of the above problems, the present invention is made, and it is an object of the present invention to provide a rubber solution production method and a rubber solution production device which allow production of a high-quality rubber solution which preserves the molecular structure of the rubber, while improving the productivity.

### TECHNICAL SOLUTION

An aspect of the present invention is a rubber solution production method, including the steps of: mixing a solvent into a source material including a plurality of rubber blocks each maintaining a block-state by a predetermined holding force, the blocks being adhered to one another by an adhesion force smaller than the holding force; and stirring the source material while applying thereto a shear force which is greater than the adhesion force but smaller than the holding force so as to separate the source material into block units, and dissolving the blocks into the solvent to produce a rubber solution.

With the structure, the source material is stirred while being subjected to a shear force which is greater than the adhesion force of the blocks but smaller than the holding force of each block. This way, while preventing destruction of each block by the shear force, adhesion surfaces of the blocks are separated from each other by the shear force. As the result, the blocks are separated into block units, while preventing destruction of the molecular structure of the rubber blocks. Since destruction of the molecular structure of the blocks is prevented, continuing to stir the blocks and the solvent thereafter causes the blocks to dissolve into the solvent starting from their surfaces, while preserving the molecular structure of the rubber. As the result, a high-quality rubber solution is produced which preserves the molecular structure of the rubber, and the productivity is improved because the series of operations enables production of the rubber solution from the rubber source material.

Further, the present invention may be adapted so that the source material is stirred while applying thereto the shear force, by moving a plurality of stirring blades (encompassing a projection formed inside the container serving as a tank) at speeds relatively different from each other (in the same direction, one of the blade stopped, or in opposite directions to each other), the blades being disposed so that a minimum gap between the blades is greater than the average maximum flattened-dimension of the blocks and smaller than the average maximum diameter of the blocks.

The above structure allows application of a desirable shear force to the source material while stirring the source material, with a use of a relatively simple structure such as a mechanism of rotating the stirring blades, and through a simple operation such as adjustment of the rotation speed or the like, which can be carried out even during the process.

Further, the present invention may be adapted so that the source material is separated into block units by stirring the source material and the solvent, while cooling down the same.

Cooling down the source material and the solvent as described above hinders dissolving of the rubber source material into the solvent. Therefore, separation of the blocks is priotized. This prevents reduction of the maximum diameter and the maximum flattened-dimension of each block before the blocks are separated from one another. Therefore, the separation of the blocks is completed within a short period of time.

Further, the present invention may be adapted so that the source material and the solvent are stirred in such a manner as to add an ascending force.

Adding the ascending force to lift up the source material when stirring the source material and the solvent creates an active flow of the source material. This way, the shear force is efficiently applied to the entire source material. As the result, separation of each block from one another is completed in a short time.

Further, the present invention may be adapted so that a stirring state (stirring speed, stirring direction, or stirring temperature) is changed according to a ratio of the rubber dissolved into the solvent.

Changing the stirring state according to the ratio of rubber dissolved in the solvent accelerates the speed of dissolving the rubber in the solvent. It is therefore possible to completely dissolve the rubber in the solvent in a short time.

Further, the present invention may be adapted so that the stirring is carried out under a pressure exceeding an atmospheric pressure.

This structure allows stirring of the solvent and the rubber in an environment where the temperature is higher than the boiling temperature of the solvent under the atmospheric pressure. Therefore, the swelling speed of the solvent relative to the rubber is increased, and the mixability is improved by a decrease in the visibly-confirmable viscosity of the solution. As the result, the time taken for dissolving is reduced.

Another aspect of the present invention is a rubber solution production device, including: a container configured to store a solvent and a source material including a plurality of rubber blocks each maintaining a block-state by a predetermined holding force, the blocks being adhered to one another by an adhesion force smaller than the holding force; and a stirring mechanism configured to stir the source material and the solvent, while applying, to the source material a shear force greater than the adhesion force but smaller than the holding force.

With the structure, the source material is stirred while being subjected to a shear force which is greater than the adhesion force of the blocks but smaller than the holding force of each block. This way, while preventing destruction of each block by the shear force, adhesion surfaces of the blocks are separated from each other by the shear force. As the result, the blocks are separated into block units, while preventing destruction of the molecular structure of the rubber blocks. Since destruction of the molecular structure of the blocks is prevented, continuing to stir the blocks and the solvent thereafter causes the blocks to dissolve into the solvent starting from their surfaces, while preserving the molecular structure of the rubber. As the result, a high-quality rubber solution is produced which preserves the molecular structure of the rubber, and the productivity is improved because the series of operations enables production of the rubber solution from the rubber source material.

Further, the present invention may be adapted so that the stirring mechanism includes: a plurality of stirring blades disposed so that a minimum gap between the blades is greater than the average maximum flattened-dimension of the blocks and smaller than the average maximum diameter of the blocks; and a drive mechanism configured to move the stirring blades at speeds relatively different from each other. The above structure allows application of a desirable shear force to the source material while stirring the source material, with a use of a relatively simple structure such as a mechanism of rotating the stirring blades, and through a simple operation such as adjustment of the rotation speed or the like, which can be carried out even during the process.

Further, the present invention may further include a temperature adjusting mechanism for cooling down the source material and the solvent. Cooling down the source material and the solvent as described above hinders dissolving of the rubber source material into the solvent. Therefore, separation of the blocks is priotized. This prevents reduction of the maximum diameter and the maximum flattened-dimension of each block before the blocks are separated from one another. Therefore, the separation of the blocks is completed within a short period of time.

Further, the present invention may be adapted so that the stirring mechanism includes an ascending stirring blade configured to add an ascending force to the source material. Adding the ascending force to lift up the source material when stirring the source material and the solvent creates an active flow of the source material. This way, the shear force is efficiently applied to the entire source material. As the result, separation of each block from one another is completed in a short time.

Further, the present invention may be adapted so that the container is formed so as to airtightly store the source material and the solvent; and the rubber solution production device further includes a pressurizing device for pressurizing the inside of the container to a pressure exceeding an atmospheric pressure.

This structure allows stirring of the solvent and the rubber in an environment where the temperature is higher than the boiling temperature of the solvent under the atmospheric pressure. Therefore, the swelling speed of the solvent relative to the rubber is increased, and the mixability is improved by a decrease in the visibly-confirmable viscosity of the solution. As the result, the time taken for dissolving is reduced.

### ADVANTAGEOUS EFFECTS

The present invention allows production of a high-quality rubber solution which preserves the molecular structure of the rubber, while improving the productivity.

### BRIEF DESCRIPTION OF THE DRAWINGS

[FIG. 1] FIG. 1 is an explanatory diagram showing an embodiment of a rubber solution production method, according to the present invention.
[FIG. 2] FIG. 2 is an explanatory diagram showing an embodiment of a rubber solution production device, according to the present invention.
[FIG. 3] FIG. 3 is an explanatory diagram of a minimum gap.
[FIG. 4] FIG. 4 is an explanatory diagram showing a process in which a block is separated.
[FIG. 5] FIG. 5 is an explanatory diagram showing an embodiment of a rubber solution production device, according to the present invention.
[FIG. 6] FIG. 6 is an explanatory diagram showing an embodiment of a rubber solution production method, according to the present invention.

### BEST MODE FOR CARRYING OUT THE INVENTION

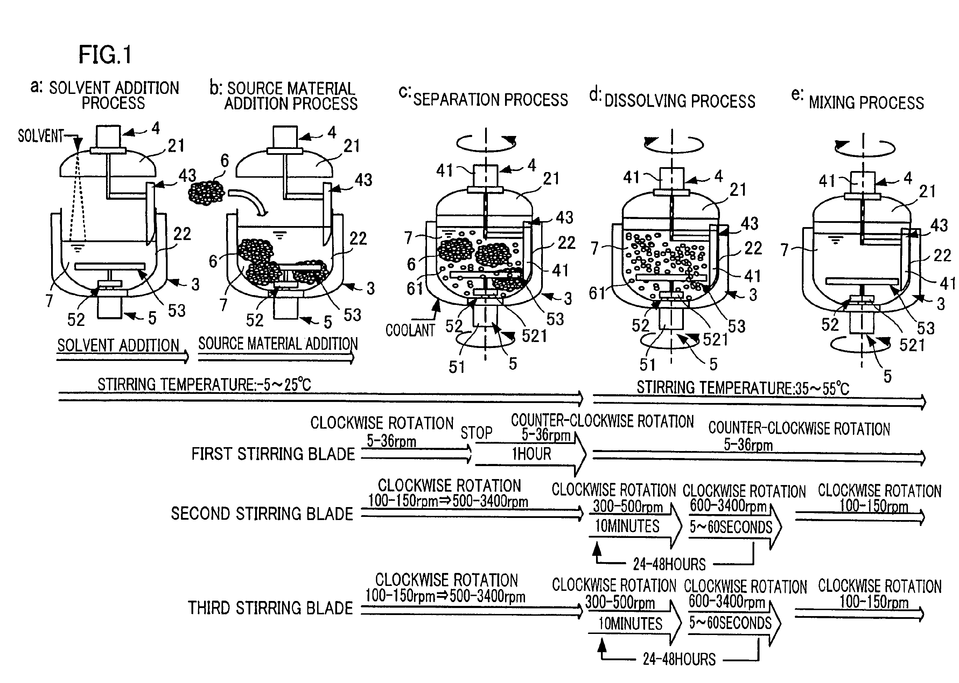

The following describes a preferable embodiment of the present invention, with reference to attached drawings. (Rubber Solution Production Method) As shown in FIG. 1, in the present embodiment of a rubber solution production method, a solvent 7 is mixed into a source material 6 and stirred while applying a shear force to the source material 6 so as to separate the source material 6 into block 61 units, and then dissolve each block 61 into the solvent 7 to produce a rubber solution. In this method, a solvent addition process, a source material addition process, a separation process, a dissolving process, and a mixing process are successively carried out in a single container 2. Note that the above description reading "a solvent 7 is mixed into a source material 6" is not intended to limit the sequence of adding the source material 6 and the solvent. The source material 6 and the solvent 7 may be supplied at the same time, or one of them may be supplied before the other.

The "source material 6" includes a plurality of rubber blocks 61 adhered to one another to form one piece of source material 6. The rubber blocks 61 each maintains the block-state by a predetermined holding force. Thus, application of a shear force less than the holding force to any of the rubber blocks 61 will deform that rubber block 61 into a flattened shape, but will not destroy the same, and the block-state is therefore maintained. The blocks are adhered to one another by an adhesion force which is smaller than the holding force. Thus, the source material 6 achieves: the holding force of the block > the adhesion force of the blocks. Therefore, the adhesion of the blocks are cancelled, before each block is destroyed, by applying a shear force exceeding the adhesion force but falling short of the holding force of each block.

The rubber structuring the blocks is not particularly limited as long as the following relation is achieved: the holding force of each block > the adhesion force of the blocks. Specifically, examples of rubber include a synthetic rubber such as PIB (Polyisobutylene) rubber. Further, the lower limit value of the weight-average absolute molecular weight of the rubber is 750000 or higher, preferably 3500000 or higher, and more preferably higher 3600000 or higher. The upper limit value of the same is 1000000 or lower, preferably 4200000 or lower, and more preferably 4300000. That is, the rubber has a weight-average absolute molecular weight within nine possible ranges each of which is a combination of one of the above mentioned lower limit values and one of the above-mentioned upper limit values of the weight-average absolute molecular weight.

The "solvent 7" may be any given liquid provided that the rubber is dissolved. For example, the solvent 7 may be one type of solvent such as toluene or hexane, or a mixture of different types of solvents such as a mixture of toluene and hexane.

In the above production method, the source material 6 is stirred while being subjected to a shear force which is greater than the adhesion force of the blocks but smaller than the holding force of each block 61. This way, while preventing destruction of each block 61 by the shear force, adhesion surfaces of the blocks 61 are separated from each other by the shear force. As the result, the blocks 61 are separated into block 61 units, while preventing destruction of the molecular structure of the rubber blocks 61. Since destruction of the molecular structure of the blocks 61 is prevented, continuing to stir the blocks 61 and the solvent 7 thereafter causes the blocks 61 to dissolve into the solvent 7 starting from their surfaces, while preserving the molecular structure of the rubber. As the result, a high-quality rubber solution is produced which preserves the molecular structure of the rubber, and the productivity is improved because the series of operations enables production of the rubber solution from the rubber source material 6.

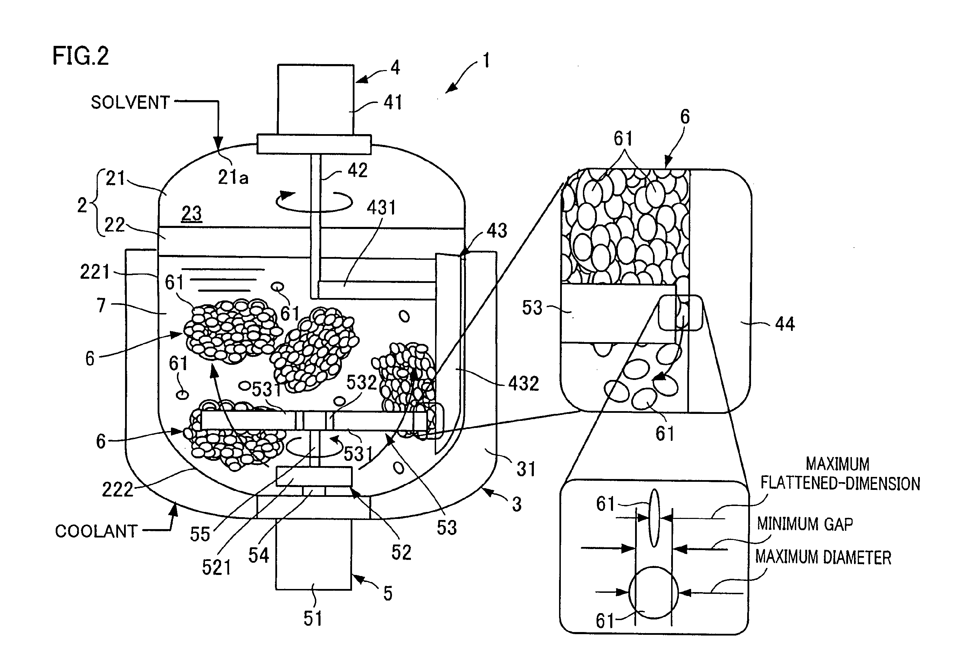

The shear force applied to the blocks 61 is generated by moving a plurality of stirring blades (specifically, a first stirring blade 43 and a second stirring blade 53) at speeds relatively different from each other. These stirring blades are disposed so that a minimum gap therebetween is greater than the average maximum flattened-dimension of the blocks 61 but smaller than the average maximum diameter of the blocks 61. Note that, as shown in FIG. 2, the "maximum flattened-dimension" is the thickness of the block 61 relative to a direction of flattening (a direction of applying an external force), the thickness resulting from applying the external force to the block to flatten the same until immediately before the block 61 is destroyed. Further, the "maximum diameter" means the maximum outer diameter of the block 61 when the block 61 is suspended alone in the solvent 7. The "minimum gap" is the smallest gap formed between the stirring blades (gap between the first stirring blade 43 and the second stirring blade 53).

When the minimum gap between the stirring blades is set as described above, the blocks 61 are not destroyed even if they are in the minimum gap between the stirring blades. This is because the minimum gap is greater than the maximum flattened-dimension. Further, when the separation of the blocks 61 progresses and the blocks 61 are separated into groups of two or three blocks 61, these groups will not exit the gap without being sandwiched between the stirring blades. This is because the minimum gap is smaller than the maximum diameter of the block 61. As the result, in the present embodiment, application of the shear force to the source material 6 separates each of the blocks 61 from one another, without crushing each block 61.

As shown in FIG. 1, the rubber solution production method includes, at least in the separation process, a cooling process for cooling the source material 6 and the solvent 7 while stirring them. Note that the wording "cooling" means to cool down the temperature to a stirring temperature. The stirring temperature is within a range of temperatures lower than the room temperature (25°C) but higher than a temperature that makes each block 61 of the source material 6 deformable to an extent a desirable ellipticity is achieved. Specifically, the cooling process cools down the temperature to a stirring temperature within a range of -5°C to 25°C, preferably within a range of 10°C to 25°C.

Cooling down the source material 6 and the solvent 7 as described above hinders dissolving of the rubber source material 6 into the solvent 7. Therefore, separation of the blocks 61 is priotized. This prevents reduction of the maximum diameter and the maximum flattened-dimension of each block 61 before the blocks 61 are separated from one another. Therefore, the separation of the blocks 61 is completed within a short period of time.

Further, in the rubber solution production method, the source material 6 and the solvent 7 are stirred in such a manner as to add an ascending force. Adding the ascending force to lift up the source material when stirring the source material 6 and the solvent 7 creates an active flow of the source material 6. This way, the shear force is efficiently applied to the entire source material 6. As the result, separation of each block 61 from one another is completed in a short time.

Further, in the rubber solution production method, a stirring state is changed according to the ratio of rubber dissolved in the solvent 7. The "stirring state" here means various stirring factors such as a stirring speed, a stirring direction, a timing of switching the stirring direction, and a stirring temperature, and a combination of these factors. Specifically, when preparing a rubber solution whose viscosity increases with an increase in the ratio of rubber dissolved in the solvent 7, the stirring speed and/or the stirring temperature are increased according to the ratio resulting in an increase in the viscosity. Changing the stirring state according to the ratio of rubber dissolved in the solvent 7 accelerates the speed of dissolving the rubber in the solvent 7. It is therefore possible to completely dissolve the rubber in the solvent in a short time.

### (Rubber Solution Production Device)

As shown in FIG. 2, the above-described rubber solution production method is carried out in a rubber solution production device 1. Note that the rubber solution production method may be carried out in other production devices. The rubber solution production device 1 includes a container 2 for storing the source material 6 and the solvent 7; an upper stirring mechanism 4 and a lower stirring mechanism 5 each serving as a stirring mechanism for stirring the source material 6 and the solvent 7.

### (Rubber Solution Production Device: Container 2)

The container 2 has a cylindrical storing body 22 whose top is opened, and a cover 21 detachably provided on top of the storing body 22, which is capable of hermetically close the opening of the storing body 22. The top of the storing body 22 is opened and has: a body 221 whose transverse section is in a circular shape; and a bottom part 222 jointed to the lower periphery of the body 221, the bottom part being curved to form a convex so that its center portion is the lowermost end of the body 22.

In the upper portion of the storing body 22 is disposed the cover 21. On the cover 21 are formed various supply ports such as a solvent supply port 21a. Each of these supply ports are formed so as to be opened or closed by an open-close valve. Further, the cover 21 is supported by a not-shown cover open/close mechanism. The cover open/close mechanism has at least a function of elevating the cover 21, which is realized by a hydraulic cylinder device or the like. The cover open/close mechanism lifts up the cover 21 to open the top of the storing body 22 through an ascending operation, and descends the cover 21 to hermetically close the top of the storing body 22 through a descending operation. This way, the container 2 is able to form therein an airtight storage space 23. In this storage space 23, the source material 6 is stirred with the solvent 7 so that each of the blocks 61 are separated from one another. After this, the blocks 61 are dissolved into the solvent 7 to generate a rubber solution.

### (Rubber Solution Production Device: stirring mechanism)

The container 2 is provided with the stirring mechanism. The stirring mechanism includes an upper stirring mechanism 4 and a lower stirring mechanism 5. The upper stirring mechanism 4 is provided to the cover 21. The upper stirring mechanism 4 has a first stirring drive device 41, a first stirring shaft 42, and a first stirring blade 43. The first stirring drive device 41 is fixed to a center portion of the top surface of the cover 21. The first stirring drive device 41 is structured by an AC motor or the like with a decelerating mechanism, and is structured so that the rotating direction is switchable and that the rotation speed is changeable to any given rotation speed by changing the frequency of the drive power. To the first stirring drive device 41 is connected a rod-shaped first stirring shaft 42. The first stirring shaft 42 has its axis set in the vertical direction, and rotatably and airtightly penetrates the center of the cover 21.

The first stirring shaft 42 is disposed so that its lower end is positioned above the storing body 22. To the lower end portion of the first stirring shaft 42 is provided a first stirring blade 43. Note that FIG. 2 shows a single first stirring blade 43; however, there may be more than one first stirring blade 43. The first stirring blade 43 has a support member 431 and a first blade 432 fixed to the leading end portion of the support member 431. The first blade 432 is formed in a plate-like shape, with its length parallel to the vertical direction, and its width parallel to a radial direction of the storing body 22. Thus, the first blade 432, when rotating about the first stirring shaft 42, stirs the source material 6 and the solvent 7 with its wall surface which crosses the rotating direction.

Note that the first blade 432 may have its width crossed (slanted with respect to) the radial direction of the storing body 22. In such a case, when the first blade 432 is rotated so that the outer circumference side of the blade leads the inner circumference side of the same (clockwise rotation), the source material 6 or the like is stirred and flows towards the inner circumference of the storing body 22. On the other hand, when the first blade 432 is rotated so that the inner circumference side of the blade leads the outer circumference side of the same (counterclockwise rotation), the source material 6 or the like is stirred and flows towards the outer circumference of the storing body 22.

Further, the first blade 432 may have its length crossed (slanted with respect to) the vertical direction. In this case, when the first blade 432 is rotated so that the upper end side of the blade leads the lower end side of the same (clockwise rotation), the source material 6 or the like is stirred and flows towards the lower side of the storing body 22. On the other hand, when the first blade 432 is rotated so that the lower end side of the blade leads the upper end side of the same (counterclockwise rotation), the source material 6 or the like is stirred and flows towards the upper side of the storing body 22.

Further, the outer end surface of the first blade 432 faces the inner wall surface of the storing body 22. The first blade 432 is spaced from the inner wall surface of the storing body 22, so that the first blade 432 functions as a scraper for scraping the source material 6 adhering to the inner wall surface of the storing body 22.

Below the upper stirring mechanism 4 having the above-described structure is disposed a lower stirring mechanism 5. The lower stirring mechanism 5 is provided to the bottom part 222 of the storing body 22. The lower stirring mechanism 5 has a second stirring drive device 51, a second stirring shaft 55, and a second stirring blade 53. The second stirring drive device 51 is fixed to a center portion of the bottom surface of the storing body 22. The second stirring drive device 51 is structured by an AC motor or the like with a decelerating mechanism, and is structured so that the rotating direction is switchable and that the rotation speed is changeable to any given rotation speed by changing the frequency of the drive power. The rotation of the second stirring drive device 51 is controlled along with the rotation of the first stirring drive device 41 so that the two blades rotate in the same direction or one of the two blades stops rotating or rotates in the opposite direction to the other. This way, the first stirring blade 43 and the second stirring blade 53 rotate at relatively different speeds, respectively. Note that a projection part may be formed on the inner surface of the container, instead of the upper stirring mechanism 4.

To the second stirring drive device 51 is connected a rod-shaped second stirring shaft 55. The second stirring shaft 55 has its axis set in the vertical direction, and rotatably and airtightly penetrates the center of the bottom part 222.

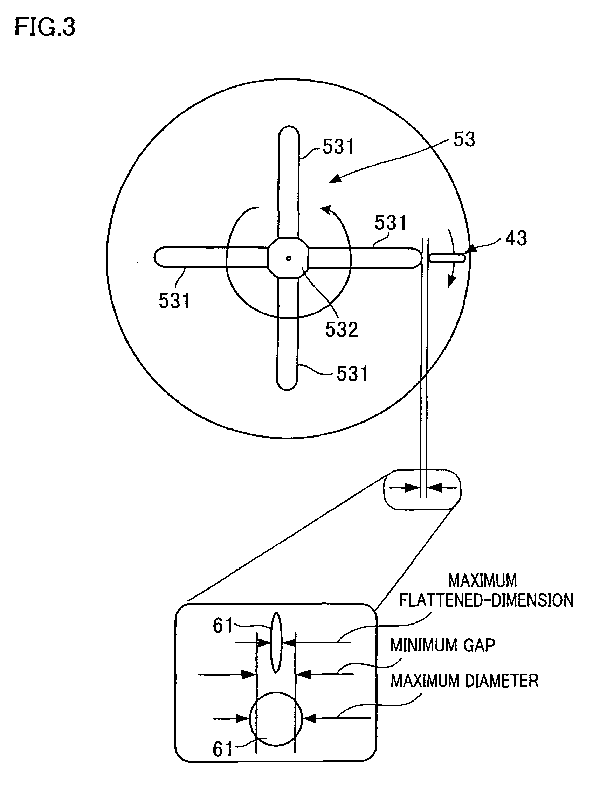

The second stirring shaft 55 is disposed so that its upper end is positioned above the level of the lower end of the blade 44. To the upper end of the second stirring shaft 55 is attached a second stirring blade 53. As shown in FIG. 3, the second stirring blade 53 has a blade support member 532 which is fixed to the second stirring shaft 55, and four second blades 531 extended in four directions from the blade support member 532, respectively. The number of the second blades 531 however is not limited to this, as long as the number is more than one. Each of the second blades 531 is formed in a plate-like shape, with its width parallel to the vertical direction, and its length parallel to a radial direction of the storing body 22. Thus, the second blade 531, when rotating about the second stirring shaft 55, stirs the source material 6 and the solvent 7 with its wall surface which crosses the rotating direction.

Note that the second blade 531 may have its length crossed (slanted with respect to) the radial direction of the storing body 22. In such a case, when the second blade 531 is rotated so that the outer circumference side of the blade leads the inner circumference side of the same (clockwise rotation), the source material 6 or the like is stirred and flows towards the inner circumference of the storing body 22. On the other hand, when the second blade 531 is rotated so that the inner circumference side of the blade leads the outer circumference side of the same (counterclockwise rotation), the source material 6 or the like is stirred and flows towards the outer circumference of the storing body 22.

Further, the second blade 531 may have its width crossed (slanted with respect to) the vertical direction. In this case, when the second blade 531 is rotated so that the upper end side of the blade leads the lower end side of the same (clockwise rotation), the source material 6 or the like is stirred and flows towards the lower side of the storing body 22. On the other hand, when the second blade 531 is rotated so that the lower end side of the blade leads the upper end side of the same (counterclockwise rotation), the source material 6 or the like is stirred and flows towards the upper side of the storing body 22.

Further, the minimum gap between the first stirring blade 43 and the second stirring blade 53 is greater than the average maximum flattened-dimension of the blocks 61 but smaller than the average maximum diameter of the blocks 61. The leading end portions of the first stirring blade 43 and the second stirring blade 53 are formed in a semi-circular shape so that the blocks 61 are not scratched by a sharp corner.

Below the second stirring blade 53 is disposed an ascending stirring mechanism 52. The ascending stirring mechanism 52 is provided to the bottom part 222 of the storing body 22. The ascending stirring mechanism 52 has an ascending stirring blade 521 which adds an ascending force to the source material 6 and the solvent 7; and an ascending stirring shaft 54 connected to the rotational axis of the ascending stirring blade 521. The ascending stirring shaft 54 is formed in a circular-ring shape, the second stirring shaft 55 airtightly penetrates therethrough. To the lower end of the ascending stirring shaft 54 is applied a rotation drive force through a transmission mechanism such as Continuously Variable Transmission (CVT), in the second stirring drive device 51. The ascending stirring blade 521 may be connected to the second stirring shaft 55 for rotating the second stirring blade 53 so as to rotate with the second stirring blade 53.

### (Rubber Solution Production Device: Temperature Adjusting Mechanism 3)

The container 2 with the above-described structure further includes a temperature adjusting mechanism 3 for cooling the source material 6 and the solvent 7. The temperature adjusting mechanism 3 has a storing body jacket 31 which covers the outer wall surface of the storing body 22. The storing body jacket 31 is structured so that a coolant such as cooling water and a heating medium such as oil or water vapor can be supplied. This way, the temperature adjusting mechanism 3 is able to adjust the temperatures of the source material 6 and the solvent 7 to desirable temperatures, from low temperatures to high temperatures.

### (Operation of Rubber Solution Production Device)

The following describes an operation of the rubber solution production device 1 having the above described structure. First, as shown in FIG. 1, the cover 21 is lifted and separated from the storing body 22. Then, the solvent 7 such as toluene or hexane is added (solvent addition process). After that, the source material 6 is added via the opening of the container 2 (source material addition process).

Next, the temperature adjusting mechanism 3 is activated and the temperatures of the source material 6 and the solvent 7 are adjusted to those within a range of 15 to 25°C. This way, the rubber source material 6 is hardly dissolved in the solvent 7, thus preventing reduction of the maximum diameter and the maximum flattened-dimension of each block 61, before the blocks 61 are separated.

After that, the second stirring blade 53 of the lower stirring mechanism 5 and the ascending stirring blade 521 of the ascending stirring mechanism 52 are rotated at a stirring speed within a range of 100 to 150 rpm, and the first stirring blade 43 is rotated at a stirring speed within a range of 9 to 11 rpm in the same rotating direction as the second stirring blade 53 and the ascending stirring blade 521. The stirring speed of the second stirring blade 53 and the ascending stirring blade 521 are gradually increased so as to avoid a situation where the rubber source material 6 locking the first stirring drive device 41 and the second stirring drive device 51, thus leading to an excessive load to the motor or the like of the first stirring drive device 41. When the stirring speed of the second stirring blade 53 and the ascending stirring blade 521 is 1000 rpm, the rotation of the first stirring blade 43 is stopped, and resumed at a stirring speed within a range of 9 to 11rpm, in the opposite direction to the rotation direction of the second stirring blade 53.

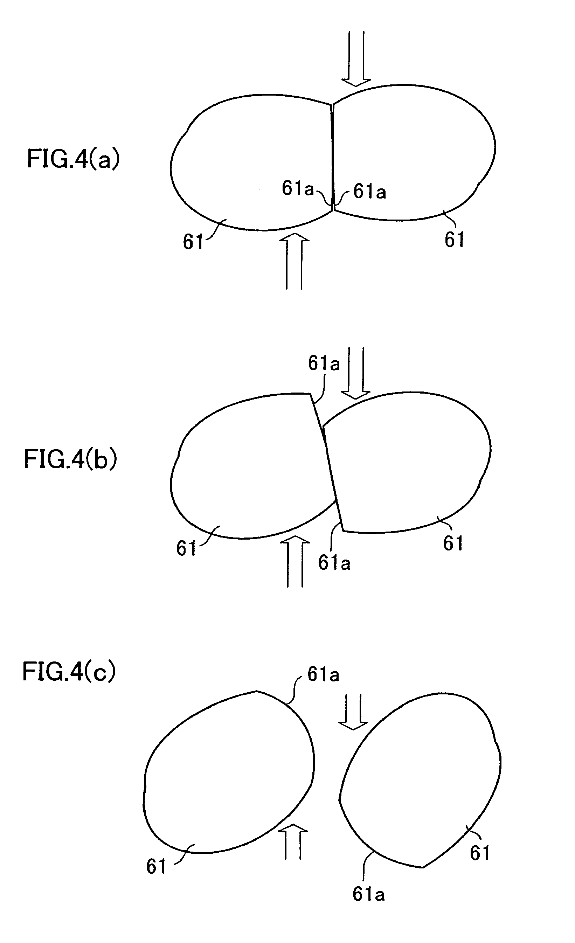

While the first stirring blade 43 and the second stirring blade 53 are rotated, the blocks 61 will not be destroyed even if they are captured in the gap between the first stirring blade 43 and the second stirring blade 53. This is because the minimum gap between these blades 43 and 53 is greater than the average maximum flattened-dimension of the blocks 61 but smaller than the average maximum diameter of the blocks 61, as shown in FIG. 2. As shown in FIGS. 4 (a) to (c), the shear force acting on the adhesion surfaces 61a of an block 61 and that of another block 61 moves these blocks 61 in different directions, respectively, thus separating the adhesion surfaces 61a of the blocks 61 from each other, the blocks 61 being adhered to each other at their respective the adhesion surfaces 61a serving as the boarder lines. This way, each of the blocks 61 is separated from one another while preventing destruction of the molecular structure of the rubber (Separation process).

After the above-described stirring operation is continued for approximately one hour, and when the blocks 61 float individually in the solvent 7, the temperature of the blocks 61 and the solvent 7 is adjusted to 30 to 55°C, so as to facilitate dissolving of the rubber in the solvent 7, as shown in FIG. 1. Then, the second stirring blade 53 and the ascending stirring blade 521 are rotated at a stirring speed within a range of 300 to 500 rpm and the first stirring blade 43 is rotated at a stirring speed within a range of 9 to 36 rpm, thus generating a flow of the blocks 61. At this time, sedimentation of the blocks 61 is prevented and the flowability of each block 61 is improved, if repeating rotation of the first stirring blade 43 and the ascending stirring blade 521 for 10 minutes at a stirring speed within a range of 300 to 500 rpm, and then within a range of 600 to 3400 rpm for 5 to 60 seconds.

Continuation of the above-described stirring operation for 24 to 48 hours will dissolve the blocks 61. In other words, as the result of continuing the stirring of the blocks 61 with the solvent 7, each block 61 starts to dissolve into the solvent 7 starting from its surface, while preserving the molecular structure of the rubber. Thus, the rubber is dissolved into the solvent 7. Through the above is produced a high-quality rubber solution which preserves the molecular structure of the rubber (dissolving process). After that, an additive or the like is added and further stirred with the rubber solution to form a desirable rubber solution (mixing process).

The example of the present invention described above solely serves as a specific example of the present invention, and shall not impose any limitation to the present invention. The specific structure or the like may be suitably modified. Further, the action and effects described in the embodiment are no more than examples of the most preferable action and effect brought about by the present invention, and the action and effects of the present invention are not limited to those described in the embodiment.

### (Alternative Form)

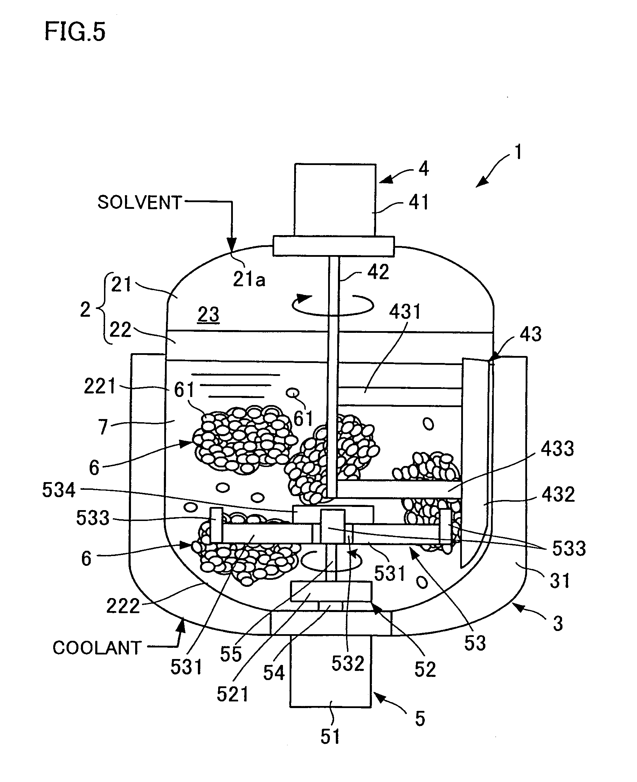

For example, as shown in FIG. 5, the rubber solution production device 1 may be structured so that the second blade 531 has an end face member 533 at its leading end portion and a projection 534 at its center portion; and that the upper stirring mechanism 4 has a horizontally-installed member 433 disposed to face the end face member 533 and the projection 534. The end face member 533, the projection 534, and the horizontally-installed member 433 form a minimum gap which is greater than the average maximum flattened-dimension of the blocks 61 but smaller than the average maximum diameter of the blocks 61. This increases the number of minimum gaps in the stirring mechanism. The above structure provides an increased number of chances of separating the blocks 61, in each rotation of the stirring mechanism. Therefore, separation of the blocks 61 from one another is completed in a short time.

Further, the rubber solution production device 1 of the present embodiment has the upper stirring mechanism 4 and the lower stirring mechanism 5 separately on the upper side and the lower side of the container 2, respectively. However, the present invention is not limited to this. The stirring mechanism may be disposed on one of the upper and lower sides of the container 2. Further, it is possible to provide the stirring mechanism on the upper side of the container 2, and provide an extraction valve at the bottom part of the container 2. This way, the rubber solution can be extracted utilizing the weight of the rubber solution itself. Therefore, extraction efficiency (yield) is improved. Specifically, while the yield is approximately 80% when pumping out the solution from the upper portion of the container, the yield is approximately 97% when extracted utilizing the weight of the solution itself.

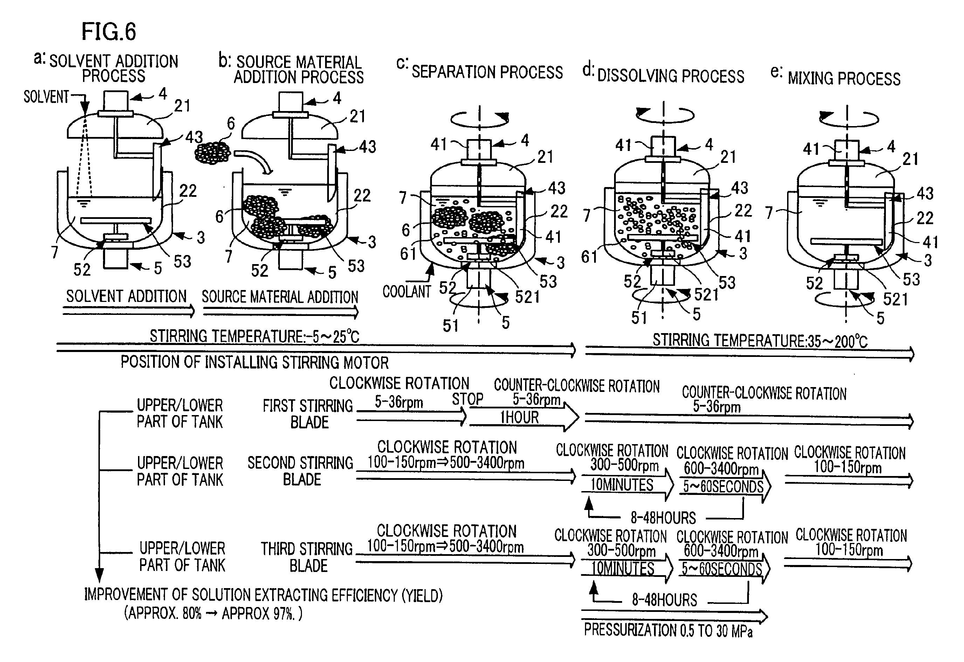

Further, the rubber solution production method of the present embodiment may be adapted so that stirring is carried out under a pressure exceeding the atmospheric pressure, as shown in FIG. 6. This allows stirring of the solvent and the rubber in an environment where the temperature is higher than the boiling temperature of the solvent under the atmospheric pressure. Therefore, the swelling speed of the solvent relative to the rubber is increased, and the mixability is improved by a decrease in the visibly-confirmable viscosity of the solution (the viscosity of the rubber solution). As the result, the time taken for dissolving is reduced.

The reduction of time taken for dissolving is confirmed by the following test. Specifically, 1.1 kg of rubber with a high-molecular mass of 0.0096kg (8.0 wt%) was stirred in toluene in the rubber solution production device shown in FIG. 2, under the following production conditions. Namely, the volume of container 2 (tank volume) was 2L. The pressure inside the container 2 was 0.2MPa. The solvent temperature was 125°C (Storing body jacket 31: vapor of 160°C). The type of solvent was toluene (boiling temperature = 110.6°C). The stirring speed was 80 rpm (Anchor blade). As the result, a state in which swelling has progressed was observed after one hour from the beginning of stirring. Based on the state of swelling after 6 hours, it is estimated that dissolving of the rubber could be completed in approximately 12 hours.

Measuring the rubber molecular mass of the rubber solution produced under the pressurized environment, the rubber molecular mass was found to be lower than that of the rubber solution produced without pressurization. To confirm the influence of the temperature to this phenomenon, the rubber was rolled flat by a pressing machine, and evenly heated (120°C, 180°C x 3minutes). Then, the molecular mass of the heated rubber was measured. It is found out as the result that the molecular mass of the heated rubber was not lowered. From this finding, the decrease in the rubber molecular mass of the rubber solution produced under the pressurized environment is believed to be attributed to a factor other than the temperature; e.g., heating of the solvent and other factors.

Production of the rubber solution under the above-described pressurized environment is possible by providing, to the rubber solution production device 1 of the present embodiment, a pressurizing device for increasing the pressure inside the container 2 to a pressure exceeding the atmospheric pressure, the container 2 being for airtightly storing the source material and the solvent. The pressurizing device may be, for example, a steel bottle for jetting an inert gas such as nitrogen or carbon dioxide.

The pressure resistance of the container 2 is preferably 30MPa or more. This is because of the following reason. If the solvent is to be heated up to 200°C, as in the usual cases, a pressure-resistance of approximately 1MPa should be sufficient. However, if the carbon dioxide in the container 2 is to be brought to the super critical state, the pressure for pressurization will be approximately 30MPa at the most. Further, to ensure the airtightness of the container 2, it is preferable to use mechanical seal for the joint portion of the container 2 and the upper stirring mechanism 4 or the like, when the pressurizing pressure is approximately 1MPa. When the pressurizing pressure exceeds 1MPa, a magnet type seal is preferred.

### REFERENCE NUMERALS

- 1: Rubber solution production device
- 2: Container
- 21: Cover
- 22: Storing body
- 3: Temperature adjusting mechanism
- 4: Upper stirring mechanism
- 41: First stirring drive device
- 42: Second stirring shaft
- 43: First stirring blade
- 5: Lower stirring mechanism
- 51: Second stirring drive device
- 52: Ascending stirring mechanism
- 521: Ascending stirring blade
- 53: Second stirring blade
- 54: Ascending stirring shaft
- 55: Second stirring shaft
- 6: Source material
- 61: Block
- 61a: Adhesion surface
- 7: Solvent

## Claims

1. A rubber solution production method, comprising the steps of:
mixing a solvent into a source material including a plurality of rubber blocks each maintaining a block-state by a predetermined holding force, the blocks being adhered to one another by an adhesion force smaller than the holding force; and
stirring the source material while applying thereto a shear force which is greater than the adhesion force but smaller than the holding force so as to separate the source material into block units, and dissolving the blocks into the solvent to produce a rubber solution.

2. The method according to claim 1, wherein
the source material is stirred while applying thereto the shear force, by moving a plurality of stirring blades at speeds relatively different from each other, the blades being disposed so that a minimum gap between the blades is greater than the average maximum flattened-dimension of the blocks and smaller than the average maximum diameter of the blocks.

3. The method according to claim 2, wherein
the source material is separated into block units by stirring the source material and the solvent, while cooling down the same.

4. The method according to claim 3, wherein
the source material and the solvent are stirred in such a manner as to add an ascending force.

5. The method according to claim 4, wherein
a stirring state is changed according to a ratio of the rubber dissolved into the solvent.

6. The method according to claim 5, wherein
the stirring is carried out under a pressure exceeding an atmospheric pressure.

7. The method according to claim 1, wherein
the source material is separated into block units by stirring the source material and the solvent, while cooling down the same.

8. The method according to claim 1, wherein
the source material and the solvent are stirred in such a manner as to add an ascending force.

9. The method according to claim 1, wherein
a stirring state is changed according to a ratio of the rubber dissolved into the solvent.

10. The method according to claim 1, wherein
the stirring is carried out under a pressure exceeding an atmospheric pressure.

11. A rubber solution production device, comprising:
a container configured to store a solvent and a source material including a plurality of rubber blocks each maintaining a block-state by a predetermined holding force, the blocks being adhered to one another by an adhesion force smaller than the holding force; and
a stirring mechanism configured to stir the source material and the solvent, while applying, to the source material a shear force greater than the adhesion force but smaller than the holding force.

12. The device according to claim 11, wherein
the stirring mechanism includes:
a plurality of stirring blades disposed so that a minimum gap between the blades is greater than the average maximum flattened-dimension of the blocks and smaller than the average maximum diameter of the blocks; and
a drive mechanism configured to move the stirring blades at speeds relatively different from each other.

13. The device according to claim 12, further comprising
a temperature adjusting mechanism for cooling down the source material and the solvent.

14. The device according to claim 13, wherein
the stirring mechanism includes
an ascending stirring blade configured to add an ascending force to the source material.

15. The device according to claim 14, wherein
the container is formed so as to airtightly store the source material and the solvent; and
the rubber solution production device further comprises a pressurizing device for pressurizing the inside of the container to a pressure exceeding an atmospheric pressure.

16. The device according to claim 11, further comprising
a temperature adjusting mechanism for cooling down the source material and the solvent.

17. The device according to claim 11, wherein
the stirring mechanism includes
an ascending stirring blade configured to add an ascending force to the source material.

18. The device according to claim 11, wherein
the container is formed so as to airtightly store the source material and the solvent; and
the rubber solution production device further comprises a pressurizing device for pressurizing the inside of the container to a pressure exceeding an atmospheric pressure.
